# EUROPÄISCHE PATENTSCHRIFT

(11) **EP 2 633 100 B1**
(45) Veröffentlichungstag und Bekanntmachung des Hinweises auf die Patenterteilung: **21.09.2016**
(21) Anmeldenummer: 11776151.0
(22) Anmeldetag: 25.10.2011
(51) Int. Cl.: C23C 28/04, C23C 14/22, F01D 5/28

(54) **VERSCHLEISSSCHUTZBESCHICHTUNG**
ANTI-WEAR COATING
REVÊTEMENT DE PROTECTION CONTRE L'USURE

(30) Priorität: 25.10.2010 DE 102010060152
(43) Veröffentlichungstag der Anmeldung: 04.09.2013
(73) Patentinhaber: MTU Aero Engines AG, 80995 München (DE)
(72) Erfinder: UIHLEIN, Thomas, 85221 Dachau (DE); EICHMANN, Wolfgang, 82178 Puchheim (DE); HEUTLING, Falko, 81377 München (DE); BRENDEL, Annegret, 85238 Petershausen (DE)
(74) Vertreter: Lang, Christian
(86) Internationale Anmeldenummer: PCT/EP2011/068678
(87) Internationale Veröffentlichungsnummer: WO 2012/055881

(56) Entgegenhaltungen:
- EP-A1- 2 011 901
- EP-A1- 2 047 979
- DE-A1- 10 108 344
- JP-A- 2010 151 267
- US-A1- 2003 138 658

## Beschreibung

Die Erfindung betrifft eine Verschleißschutzbeschichtung speziell für erosionsbelastete Bauteile unter mechanischer Beanspruchung, insbesondere für Gasturbinenbauteile, die aus mindestens zwei verschiedenen einander mehrfach abwechselnden, auf eine zu beschichtende Oberfläche eines Bauteils aufgebrachten Einzelschichten besteht.

Gasturbinenbauteile werden zum Schutz vor Verschleiß, speziell Erosion und Korrosion, mit einer Verschleißschutzschicht versehen. Diese Verschleißschutzschicht besteht aus mehreren Lagen von Einzelschichten aus unterschiedlichen Materialien, wie aus der Druckschrift DE 10 2004 001 392.6 bekannt ist. Dabei wird auf einem Bauteil zunächst eine metallische Schicht aufgebracht, um eine gute Anbindung der Verschleißschutzschicht an den metallischen Grundwerkstoff zu ermöglichen. Darauf folgen eine Metalllegierung und ein gradierter Metall-KeramikWerkstoff. Den Abschluss dieses Mehrlagenschichtsystems bildet eine keramische Schicht. Dieses Mehrlagenschichtsystem kann auch mehrmals übereinander abgeschieden werden, immer beginnend mit einer metallischen Schicht zur besseren Anbindung an den metallischen Grundwerkstoff und endend mit einer keramischen Schicht an der Oberfläche. Zusätzlich kann noch eine Haftvermittlungsschicht zwischen dem ersten Mehrlagenschichtsystem und dem Bauteil eingebracht sein.

Generell sind derartige Multilayer-Schichten basierend auf diesem Prinzip aus harten (Haupt-) und weichen (Zwischen-) Schichten aufgebaut. Die Hauptschichten zeichnen sich dabei durch einen hohen Erosionswiderstand und die Zwischenschichten durch eine hohe Duktilität aus. Dadurch wird erreicht, dass Risse, die sich bei Überbelastung bilden, im Multilayeraufbau in den duktilen Zwischenschichten durch Abstumpfung der Rissspitzen aufgefangen werden.

Um Erosion zu verhindern ist aus der Druckschrift DE 10 2006 001 864.8 bekannt, die harten keramischen Schichten eines Mehrlagenschichtsystems zu strukturieren. Solche keramische Schichten werden in vertikaler Richtung kolumnar segmentiert, um das Abplatzen von größeren Schichtbereichen während des Partikelerosionsangriffs zu verhindern. Dabei folgt die Segmentierung kolumnar säulenförmig, oder stängelig oder faserförmig. Die Grenzflächen zwischen den Kolumnen der kolumnar segmentierten Schichten verhindern das Wachstum von Mikrorissen in Richtung parallel zur Oberfläche, die während Erosionsbelastung hervorgerufen werden. Dabei ist es jedoch nachteilig, dass Risse in vertikaler Richtung sich ungehindert entlang der Grenzfläche ausbreiten können. Unter Belastung eines Bauteils wirken diese Grenzflächen zwischen Kolumnen wie Mikrokerben oder Mikroanrisse. Bei starker Überbelastungen können die duktilen Zweischenschichten die ankommenden Mikrorisse nicht mehr auffangen und sie wachsen bis in den Grundwerkstoff hinein. Der sich unter Zugspannung ausbildende Mikroriss kann sich bis weit in den Grundwerkstoff ausbreiten und zu einem vorzeitigen Versagen des Bauteils führen. Dies hat den deutlichen Nachteil, dass die Lebensdauer eines Bauteils erheblich herabgesetzt ist.

Die deutsche Offenlegungsschrift DE 101 08 344 A1 beschreibt ein mit einem amorphen Kohlenstoff beschichtetes Bauteil, die eine Zwischenschicht mit einem Element aus einer der Gruppen IVa, Va, VIa und IIIb sowie der Gruppe IVb mit Ausnahme von Kohlenstoff oder mit einem Carbid dieser Gruppe umfasst. Damit soll die Haftfestigkeit der Kohlenstoffschicht verbessert werden.

Somit liegt der Erfindung die Aufgabe zu Grunde eine Verschleißschutzschicht bereitzustellen, die einerseits die Lebensdauer eines Bauteils verlängert und andererseits Mikrorissbildung verhindert.

Die Aufgabe der Erfindung wird durch eine Verschleißschutzbeschichtung mit den Merkmalen des unabhängige Anspruchs 1 gelöst. Weitere vorteilhafte Ausführungsformen der Erfindung sind in den Unteransprüchen wiedergegeben.

Die Erfindung betrifft eine Verschleißschutzbeschichtung, die speziell für erosionsbelastete Bauteile unter mechanischer Beanspruchung, insbesondere für Gasturbinenbauteile geeignet ist und mindestens zwei verschiedene, vorzugsweise einander mehrfach abwechselnde, auf einer zu beschichtenden Oberfläche eines Bauteils aufgebrachte Einzelschichten umfasst. Im Gegensatz zu den bekannten Verschleißschutzschichten werden jedoch bei der erfindungsgemäßen Verschleißschutzbeschichtung die Einzelschichten zum einen aus einer bekannten keramischen Hauptschicht und zum anderen aus einer quasi-duktilen nicht-metallischen Zwischenschicht gebildet. Die quasi-duktile nicht-metallische Zwischenschicht ist, wie nachfolgend noch gezeigt wird, derartig ausgebildet, dass Rissen, die in Richtung Grundwerkstoff wachsen, durch Rissverzweigung in der quasi-duktilen nicht-metallischen Zwischenschicht Energie entzogen wird, sodass das Risswachstum verlangsamt bzw. gestoppt werden kann.

Eine entsprechende Vetschleißschutzbeschichtung kann ebenfalls als Mehrlagenbeschichtung ausgebildet sein, wobei die quasi-duktile nicht-metallische Zwischenschicht und die keramische Hauptschicht, die ein sprödes und hartes Eigenschaftsprofil aufweist, wechselweise mehrfach übereinander angeordnet sein können.

Insbesondere kann die quasi-duktile, nicht-metallische Zwischenschicht direkt auf dem zu beschichteten Bauteil angeordnet sein, während an der Oberfläche der Verschleißschutzbeschichtung eine harte, keramische Hauptschicht angeordnet sein kann.

In einer Ausgestaltung der Erfindung kann die quasi-duktile, nicht-metallische Zwischenschicht ein Material mit schwachen Bindungen, bevorzugt Materialien mit Blattstruktur oder hexagonalem Gitteraufbau, die ein leichtes Abscheren des Materials ermöglichen oder leicht aktivierbare Gleitebenen umfassen, aufweisen, wobei die Blattebenen oder Basalbenen des Materials bzw. die leicht aktivierbaren Gleitebenen parallel zur Bauteiloberfläche angeordnet sind. So sind beispielsweise Arsen und Antimon geeignete Materialien, da sie eine Blattstruktur aufweisen, oder beispielsweise Graphit, Molybdändisulfid und/oder hexagonales Bornitrid, da sie einen hexagonalen Gitteraufbau aufweisen. Durch die geringe Haftung zwischen den Basalebenen bzw. das leichte Abgleiten benachbarter Ebenen bei diesen Materialien, kommt es zu einer Rissumlenkung, sodass sich der Riss zwischen den Basalebenen bzw. den Ebenen, die leicht gegeneinander gleiten können, ausbreitet. Da die Materialien so aufgebracht sind, dass die Basalebenen bzw. die leicht gegeneinander gleitenden Ebenen parallel zur zu beschichtenden Oberfläche ausgerichtet sind, wird das Risswachstum in Richtung des Grundwerkstoffs vermieden.

In einer weiteren Ausgestaltung der Erfindung kann die quasi-duktile, nicht-metallische Zwischenschicht ein Viellagenschichtsystem aufweisen, das neben Schichten mit schwächerer Bindung (Gleitschichten) auch keramische Schichten aufweist. Hierzu eignen sich Materialkombinationen, wie beispielsweise C/TiC, C/SiC, C/ZrC, hexagonales BN/ kubisches BN und/oder hexagonales BN/SiC.

In einer weiteren Ausgestaltung der Erfindung können die Teilschichten im Viellagenschichtsystem der quasi-duktilen, nicht-metallische Zwischenschicht schwache Grenzflächen zueinander aufweisen.
In einer weiteren Ausführungsform der Erfindung können Schichten mit schwächerer Bindungen (Gleitschichten) im Viellagenschichtsystem keine oder geringe chemische Reaktionen zu keramischen Schichten im Viellagenschichtsystem aufweisen.

In einer weiteren Ausgestaltung der Erfindung können Schichten mit schwächerer Bindung (Gleitschichten) und keramische Schichten im Viellagenschichtsystem eine geringe Oberflächenrauheit aufweisen. Diese geringe Oberflächenrauheit bedingt eine schwache mechanische Verzahnung zwischen den einzelnen Schichten.

In einer weiteren Ausgestaltung der Erfindung kann die quasi-duktile, nicht-metallische Zwischenschicht ein keramisches Material und/oder weitere Hartstoffverbindungen mit gezielt eingebrachten Poren umfassen. Dabei kann das keramische Material Chromnitrid, Titannitrid und/oder Verbindungen daraus, insbesondere mit weiteren Elementen wie z. B. Aluminium oder Silizium umfassen, so dass z. B. Chromaluminiumnitrid oder Titanaluminiumnitrid oder Chromsiliziumnitrid oder Titansiliziumnitrid enthalten ist.

In einer weiteren Ausgestaltung der Erfindung kann die quasi-duktile, nicht-metallische Zwischenschicht ein keramisches Material und/oder Hartstoffverbindungen mit gezielt eingebrachten Mikrorissen umfassen, die parallel zur Oberfläche verlaufen. Das Material kann wieder Chromnitrid, Titannitrid und/oder Verbindungen daraus, insbesondere mit weiteren Elementen wie Aluminium oder Silizium und/oder weitere bekannte Hartstoffverbindung auf Nitrid- oder Karbidbasis umfassen.

In einer weiteren Ausgestaltung der Erfindung kann die quasi-duktile, nicht-metallische Zwischenschicht ein keramisches Material und/oder eine Hartstoffverbindung mit gezielt eingebrachten Fremdphasen umfassen.

Nachfolgend wird die Erfindung anhand eines Ausführungsbeispiels mit Verweis auf die beigefügten Zeichnungen näher erläutert. Die Zeichnungen zeigen hierbei in rein schematischer Weise in
- Figur 1: die Rissverzweigung in einer erfindungsgemäßen Zwischenschicht;
- Figur 2: eine Blattstruktur bzw. Basalebenen im hexagonalen Gitteraufbau von Graphit;
- Figur 3: einen Aufbau der erfindungsgemäßen Zwischenschicht als Viellagenschichtsystem;
- Figur 4: eine Darstellung der erfindungsgemäßen Zwischenschicht mit Poren, die die Risse stoppen;
- Figur 5: eine Darstellung der erfindungsgemäßen Zwischenschicht mit Mikrorissen parallel zur Oberfläche oder zum Grundwerkstoff;
- Figur 6: eine Darstellung der erfindungsgemäßen Zwischenschicht mit gezielt eingebrachten Fremdphasen.

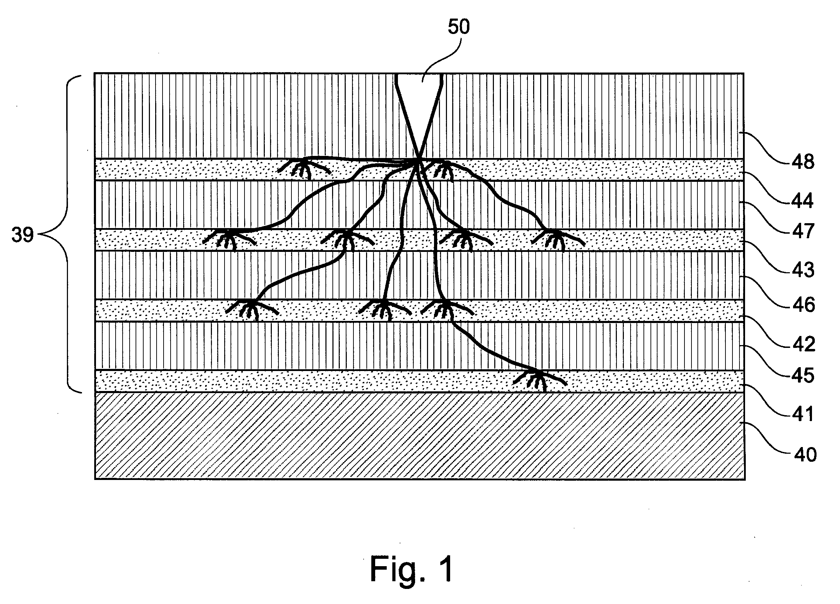

Die Figur 1 zeigt einen Grundwerkstoff 40 und ein darauf aufgebrachtes Mehrlagenschichtsystem 39. Die Beeinflussung der Eigenschaften (z. B. mechanische Festigkeit) des Grundwerkstoffs 40 durch Risse, die sich unter Belastung von der Mehrlagenschicht 39 ausgehend in den Grundwerkstoff 40 ausbreiten, kann durch gezielten Aufbau der einzelnen Lagen des Mehrlagenschichtsystems 39 verhindert werden. Das Mehrlagenschichtsystem 39 weist eine erste Zwischenschicht 41, eine harte keramische Hauptschicht 45, eine zweite Zwischenschicht 42, eine keramische Hauptschicht 46, eine dritte Zwischenschicht 43, eine dritte keramische Hauptschicht 47, eine vierte Zwischenschicht 44 und eine vierte keramische Hauptschicht 48 auf. Die harten keramischen Hauptschichten ermöglichen die Rissausbreitung direkt in Richtung des Grundwerkstoffs 40. Die erfindungsgemäßen quasi-duktilen, nicht-metallischen Zwischenschichten 41, 42, 43, 44 im Mehrlagenschichtsystem 39 verhindern, dass der Riss 50 weiter in Richtung Grundwerkstoff 40 wächst und zur vorzeitigen Schädigung des Bauteils führt. Dem Riss 50 wird durch Rissverzweigung in den Zwischenschichten 41, 42, 43, 44 Energie entzogen und dadurch der keramischen Mehrlagenschicht 39 ein quasi-duktiles Verhalten aufgeprägt.

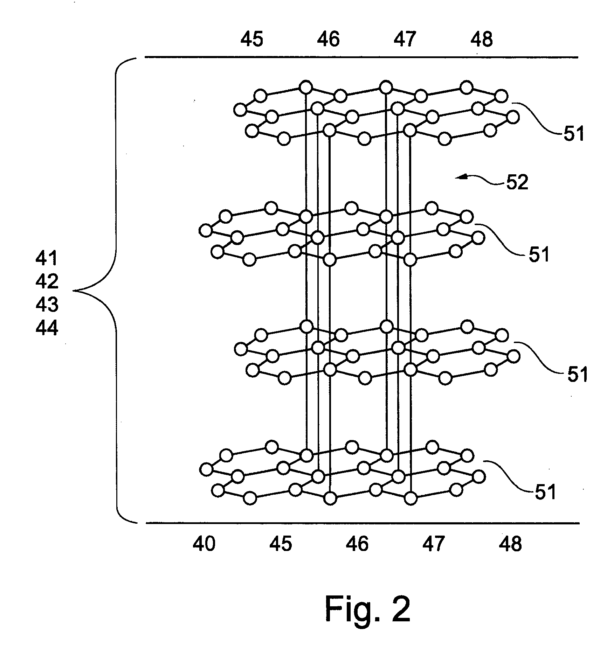

Für die Zwischenschichten 41, 42, 43, 44 eignen sich Materialien mit Blattstruktur. Eine solche Blattstruktur weisen Arsen und Antimon auf. Darüber hinaus können auch hexagonale Modifikation des Kohlenstoffs verwendet werden. So ist in Figur 2 ein hexagonaler Gitteraufbau von Graphit zu sehen. Die Festigkeit in den Blattebenen (Basalebenen 51) ist durch Atombindungen höher als senkrecht dazu. Schwache Nebenvalenzkräfte 52 bewirken jedoch eine geringe Haftung zwischen den Basalebenen. Die Basalebenen 51 sollen deshalb parallel zur Oberflächen des Grundwerkstoffs ausgerichtet sein. Risse, die von den keramischen Hauptschichten 45, 46, 47, 48 im Mehrlagenschichtsystem 39 ausgehen, werden dann bevorzugt entlang der schwachen Bindung 52 (zwischen den Basalebenen 51) der erfindungsgemäßen Zwischenschicht 41, 42, 43, 44 wachsen. Dadurch kann eine Rissumlenkung und die Aufspaltung in viele kleinere Risse erreicht werden, was zum Rissstopp führt.

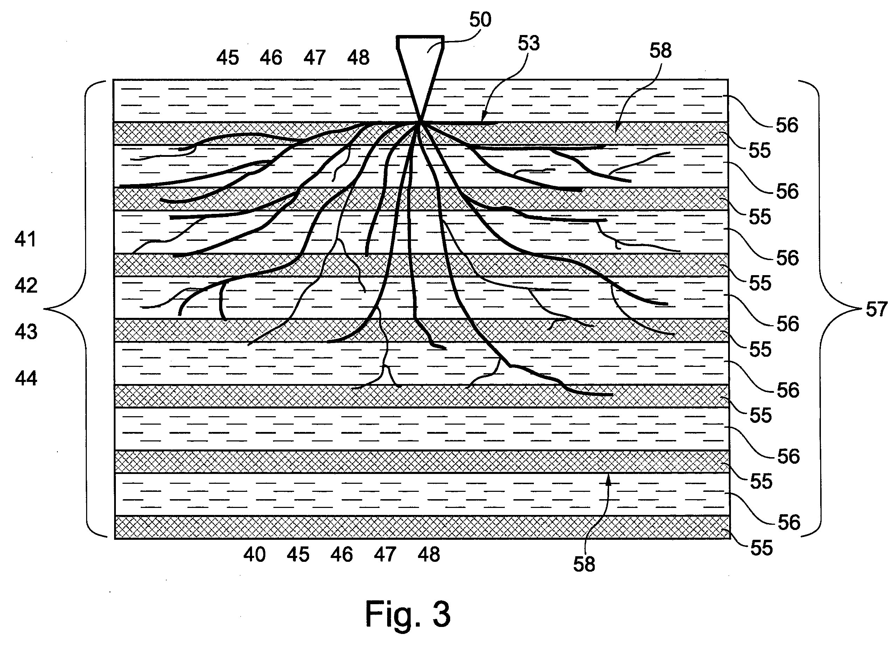

Figur 3 zeigt eine schematische Darstellung einer erfindungsgemäßen Zwischenschicht 41, 42, 43, 44 als Viellagenschichtsystem 57. Der Aufbau der Viellagenschicht 57 ist so gewählt, dass entweder Schichten mit schwächerer Bindung 55 und/oder schwachen Grenzflächen 58 zwischen den Teilschichten 55, 56 der Viellagenschicht 57 vorhanden sind. Die Rissumlenkung von vertikalen Rissen 50, die von den keramischen Hauptschichten 45, 46, 47, 48 ausgehen, erfolgt entweder an den schwachen Grenzflächen 58 der erfindungsgemäßen Viellagenschicht oder in Teilschichten 55 mit schwachen Bindungen. Schwache Grenzflächen 58 können hergestellt werden durch Verwendung geeigneter Materialpaarungen, die keine chemische Reaktion zeigen. Auch eine geringe Oberflächenrauheit der einzelnen Lagen sorgt für eine schwache mechanische Verzahnung und damit auch eine geringe Haftung.

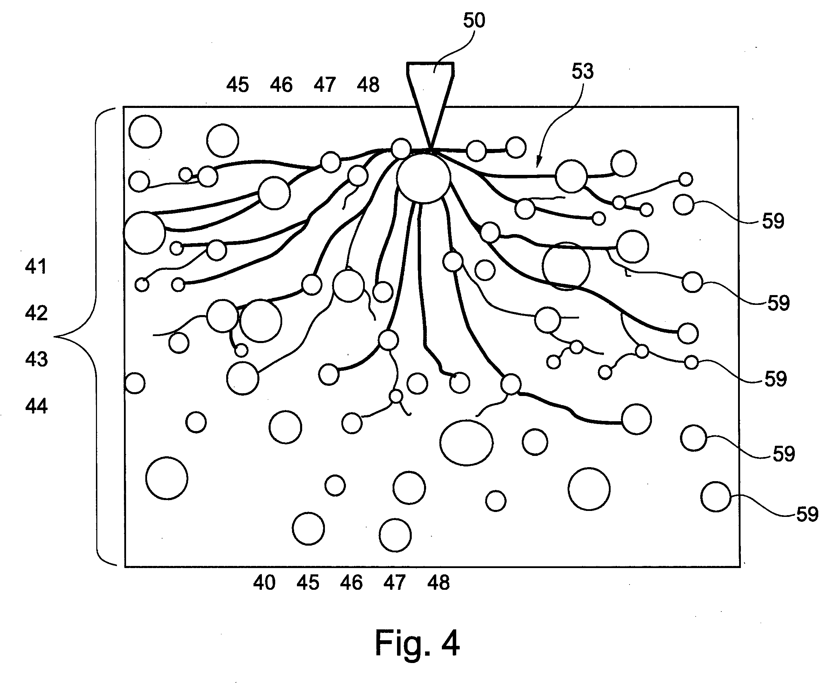

Figur 4 zeigt eine schematische Darstellung einer Ausgestaltung der erfindungsgemäßen Zwischenschicht 41, 42, 43, 44 mit Poren 59. Durch das gezielte Einbringen von Poren 59 in die Zwischenschicht 41, 42, 43, 44 wird erreicht, dass Risse, die von der keramischen Hauptschicht 45, 46, 47, 48 in der Mehrlagenschicht 39 ausgehen, die Ausbreitungsrichtung ändern, sich verzweigen und nicht bis zum Grundwerkstoff 40 wachsen. Die Änderung der Ausbreitungsrichtung erfolgt durch die Poren, die nur über schwache Materialbrücken miteinander verbunden sind.

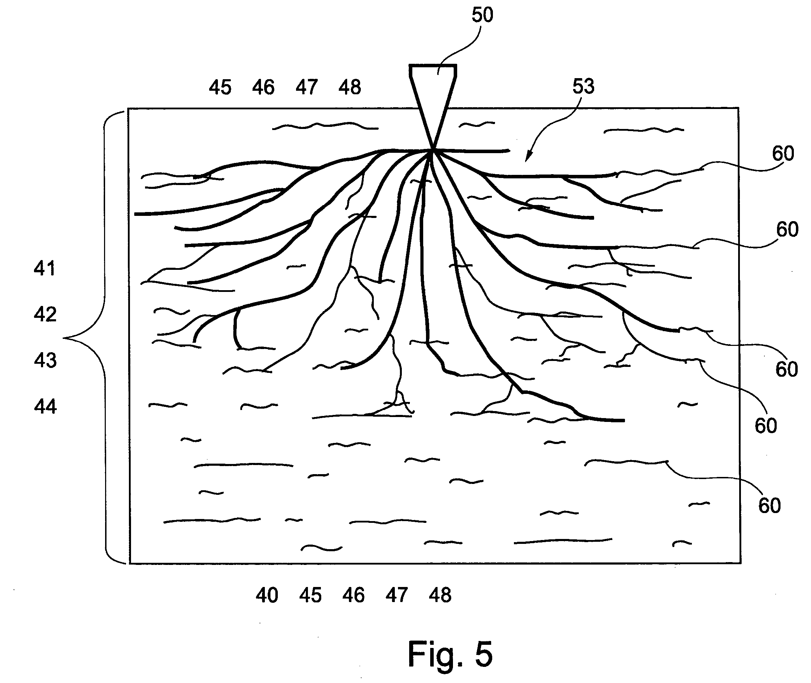

Figur 5 zeigt eine schematische Darstellung einer Ausgestaltung der erfindungsgemäßen Zwischenschicht 41, 42, 43, 44 mit Mikrorissen parallel zur Oberfläche oder zum Grundwerkstoff. Mikrorisse 60 haben die gleichen Wirkungen wie Poren 59. Sie müssen jedoch parallel zur Oberfläche des Grundwerkstoffs orientiert sein, um Risse, die von der keramischen Hauptschicht 45,46, 47, 48 der Mehrlagenschicht 39 ausgehen, zu stoppen.

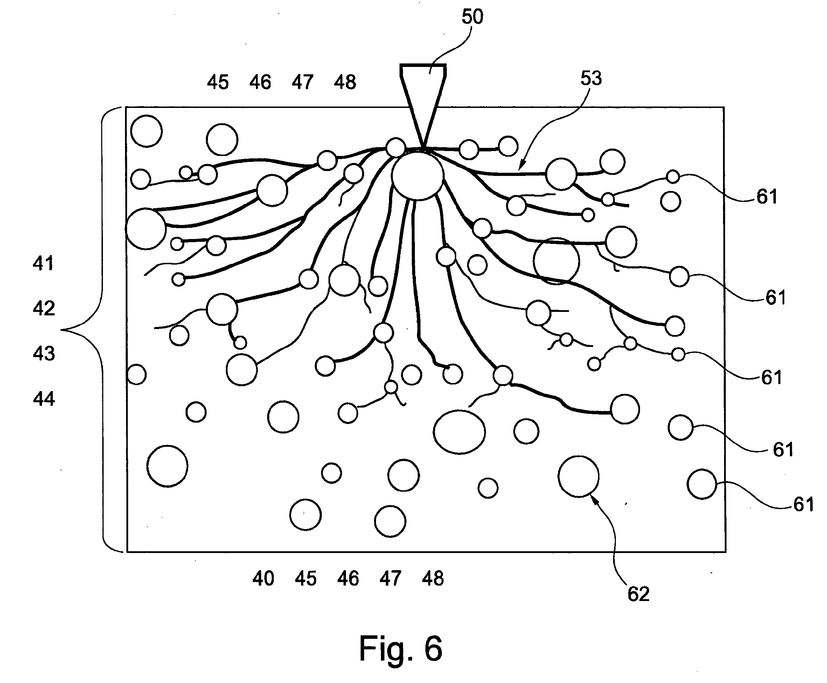

Figur 6 zeigt eine Zwischenschicht 41, 42, 43, 44 mit gezielt eingebrachten Fremdphasen 61. Diese Fremdphasen 61 bewirken, dass Risse, die von der keramischen Hauptschicht 45, 46, 47, 48 der Mehrlagenschicht 39 ausgehen, die Ausbreitungsrichtung ändern, sich verzweigen und nicht bis zum Grundwerkstoff 40 wachsen. Dabei werden die Risse entweder an der schwachen Grenzfläche zur Fremdphase 62 oder durch bevorzugte Ausbreitung in der Fremdphase umgeleitet.

Es ist dabei festzuhalten, dass sowohl die Ausführungsform in Figur 4, in Figur 5 und in Figur 6 miteinander kombinierbar sind. So kann eine Zwischenschicht 41, 42, 43, 44 sowohl Poren als auch Mikrorisse parallel zur Oberfläche oder zum Grundwerkstoff und/oder Fremdphasen enthalten.

## Patentansprüche

1. Verschleißschutzbeschichtung für erosionsbelastete Bauteile unter mechanischer Beanspruchung, insbesondere für Gasturbinenbauteile, die mindestens zwei verschiedene, einander mehrfach abwechselnd auf einer zu beschichtenden Oberfläche eines Bauteils aufgebrachte Einzelschichten aufweiset,
**dadurch gekennzeichnet,**
**dass** die Einzelschichten eine keramische Hauptschicht (45, 46, 47, 48) und eine quasiduktile, nicht-metallische Zwischenschicht (41, 42, 43, 44) umfassen, die so ausgebildet ist, dass Rissen, die in Richtung Grundwerkstoff wachsen, durch Rissverzweigung in der quasi-duktilen nicht-metallischen Zwischenschicht Energie entzogen wird, sodass das Risswachstum verlangsamt oder gestoppt werden kann, wobei die Zwischenschicht (41, 42, 43, 44) ein Material mit bevorzugten Gleitebenen umfasst und die Gleitebenen parallel zur Oberfläche des Bauteils angeordnet sind, oder wobei
die Zwischenschicht (41, 42, 43,44) ein keramisches Material und/oder hartstoffverbindungen umfasst, in die gezielt Poren und/oder im Wesentlichen parallel zum Grundwerkstoff verlaufende Mikrorisse eingebracht worden sind.

2. Verschleißschutzschicht nach Anspruch 1,
**dadurch gekennzeichnet,**
**dass** die Zwischenschicht (41, 42, 43, 44) ein Viellagenschichtsystem (57) aufweist, das Gleitschichten (55) und keramische Schichten (56) umfasst.

## Claims

1. Anti-wear coating for components which are subject to erosion under mechanical stress, in particular for gas turbine components, said coating comprising at least two different individual layers which have been applied in a multiply alternating manner with one another to a surface of a component to be coaled.
**characterised in that**
the individual layers comprise a ceramic main layer (45, 46, 47, 48) and a pseudoductile, non-metallic intermediate layer (41, 42, 43, 44), which is configured such that energy is withdrawn from cracks which grow in the direction of the substrate material by crack branching in the pseudoductile non-metallic intermediate layer, so that crack growth can be slowed or stopped, wherein the intermediate layer (41, 42, 43, 44) comprises a material having preferential sliding planes, and the sliding planes are arranged parallel to the surface of the component, or, wherein the intermediate layer (41, 42, 43, 44), comprises a ceramic material and/or hard material compounds having deliberately introduced pores and/or microcracks which run essentially parallel to the substrate material.

2. Anti-wear coating in accordance with claim 1,
**characterised in that**
the intermediate layer (41, 42, 43,44) comprises a multilayer system (57) comprising sliding layers (55) and ceramic layers (56).

## Revendications

1. Revêtement de protection contre l'usure pour des composants sollicités par l'érosion sous sollicitation mécanique, en particulier pour des composants de turbine à gaz, qui présente au moins deux couches individuelles différentes appliquées en alternant plusieurs fois sur une surface à revêtir d'un composant, **caractérisé en ce que** les couches individuelles comprennent une couche principale céramique (45, 46, 47, 48) et une couche intermédiaire quasi-ductile, non métallique (41, 42, 43, 44), qui est configurée de telle manière que de l'énergie est évacuée de fissures, qui se développent en direction du matériau de base, par ramification de fissures dans la couche intermédiaire quasi-ductile, non métallique si bien que le développement de fissures peut être ralenti ou arrêté, cependant que la couche intermédiaire (41, 42, 43, 44) comprend un matériau avec des plans de glissement préférés et les plans de glissement sont placés parallèlement à la surface du composant ou cependant que la couche intermédiaire (41, 42, 43, 44) comprend un matériau céramique et/ou des composés réfractaires durs dans lesquels des pores et/ou des microfissures sensiblement parallèles au matériau de base ont été introduits de manière ciblée.

2. Revêtement de protection contre l'usure selon la revendication 1, **caractérisé en ce que** la couche intermédiaire (41, 42, 43, 44) présente un système stratifié multicouche (57) qui comprend des couches de glissement (55) et des couches céramiques (56).
